(19) Europäisches Patentamt / European Patent Office / Office européen des brevets

(11) **EP 4 549 396 A1**

(12) **EUROPEAN PATENT APPLICATION**

(43) Date of publication:
**07.05.2025 Bulletin 2025/19**

(21) Application number: **24208104.0**

(22) Date of filing: **22.10.2024**

(51) International Patent Classification (IPC):
**C01G 53/42** (2025.01)     **C01G 53/80** (2025.01)
**H01M 4/505** (2010.01)     **H01M 4/525** (2010.01)

(52) Cooperative Patent Classification (CPC):
**C01G 53/80; C01G 53/42; H01M 4/505;**
**H01M 4/525;** C01P 2002/52; C01P 2002/54;
C01P 2002/76; C01P 2002/77; C01P 2004/45;
C01P 2004/51; C01P 2004/53; C01P 2004/61;
C01P 2006/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.10.2023 KR 20230147196**

(71) Applicant: **ECOPRO BM CO., LTD.**
**Cheongju-si, Chungcheongbuk-do 28117 (KR)**

(72) Inventors:
 • **SHIN, Jae Hoon**
  **28116 Cheongju-si, Chungcheongbuk-do (KR)**
 • **SHIN, Jong Seung**
  **28116 Cheongju-si, Chungcheongbuk-do (KR)**
 • **BAE, Jin Ho**
  **28116 Cheongju-si, Chungcheongbuk-do (KR)**
 • **KIM, Sang Hyeok**
  **28116 Cheongju-si, Chungcheongbuk-do (KR)**
 • **LEE, Hye Rim**
  **28116 Cheongju-si, Chungcheongbuk-do (KR)**
 • **KIM, Jin Kyu**
  **28116 Cheongju-si, Chungcheongbuk-do (KR)**

(74) Representative: **Vossius & Partner**
**Patentanwälte Rechtsanwälte mbB**
**Siebertstrasse 3**
**81675 München (DE)**

(54) **POSITIVE ELECTRODE ACTIVE MATERIAL AND METHOD OF MANUFACTURING POSITIVE ELECTRODE ACTIVE MATERIAL**

(57)     A positive electrode active material according to one aspect of the present invention may be a lithium composite oxide, and may satisfy relational expression 1 below in an XRD pattern obtained through Rietveld fitting as a result of X-ray diffraction (XRD) analysis using a CuKα ray:

$$[\text{Relational Expression 1}]\ 0.110 \le \text{FWHM}_{(104)} \le 0.170,$$

wherein the positive electrode active material according to one aspect of the present invention may include: preparing a first lithium composite oxide by primarily heat-treating a first mixture including the prepared oxide precursor, a lithium-containing compound, and a first cobalt-containing compound.

EP 4 549 396 A1

FIG. 1

<Ni vacancy removal>

Primary Co treatment

<Residual lithium removal>

seondary Co treatment

Residual lithium

## Description

## Technical Field

The present invention relates to a positive electrode active material and a method for preparing the positive electrode active material, and more particularly, to a positive electrode active material for a secondary battery prepared from an oxide precursor and a method for preparing the positive electrode active material.

## Background

With the development of portable mobile electronic devices such as smart phones, MP3 players, and tablet PCs, there has been an explosively increasing demand for secondary batteries capable of storing electrical energy. In particular, with the advent of electric vehicles, mid- to large-sized energy storage systems, and portable devices requiring a high energy density, there has been an increasing demand for lithium secondary batteries.

As a lithium composite oxide included in a positive electrode active material, the most popular substance in recent years is a lithium nickel manganese cobalt oxide, $Li(Ni_xCo_yMn_z)O_2$ (in which the x, y, and z are atomic fractions of independent oxide composition elements, respectively, and are $0<x\leq1$, $0<y\leq1$, $0<z\leq1$, and $0<x+y+z\leq1$). This substance for the positive electrode active material has an advantage of producing high capacity because the substance is used at a voltage higher than that of $LiCoO_2$, which has been actively studied and used as the positive electrode active material, and has an advantage of a low price because a Co content is relatively low.

However, this lithium composite oxide is subject to a volume change according to intercalation and deintercalation of lithium ions during charging and discharging. There is a problem in that the volume of primary particles of the lithium composite oxide rapidly changes during charging and discharging, cracks occur in secondary particles according to repeated charging and discharging, or a crystal structure is subject to collapse or phase transition.

In order to compensate for these disadvantages, there has been a newly emerging demand for a high nickel-based positive electrode active material, which is a Ni-rich system having a nickel (Ni) content of 60 mol% or more based on a content of all metals excluding lithium (Li) as a positive electrode active material for a secondary battery, and there has been a need to increase production of the high nickel-based positive electrode active material.

However, the high nickel-based positive electrode active material has a disadvantage in that stability is lowered due to a high Ni content, thereby reducing a lifespan. In addition, due to a high Li/M ratio during preparation, a content of residual lithium after calcination is so high that it is difficult to prepare a cell due to a gelation phenomenon during preparation of an electrode slurry. Accordingly, a washing process is introduced to remove residual lithium, but there is a problem in that a surface of the positive electrode is damaged during the washing process and thus the battery properties are lowered.

## Detailed Description of the Invention

## Technical Problem

An existing positive electrode active material was prepared by heat-treating a hydroxide precursor together with a lithium-containing compound, but there is a limitation in improving productivity. Thus, the present invention is intended to increase an amount of production by 10% or more by applying an oxide precursor to the preparation of the positive electrode active material, and it is necessary to develop a technology for applying the same.

As a result of X-ray diffraction (XRD) analysis using a $CuK\alpha$ ray, the present inventors control a full width at half maximum (FWHM(deg., 2Θ)) of a (104) plane and/or a full width at half maximum (FWHM(deg., 2Θ)) of a (003) plane in an XRD pattern obtained through Rietveld fitting to improve a battery performance such as lifespan, capacity and the like when applied to a secondary battery.

In addition, the present inventors intend to prepare a positive electrode active material having increased stability and reduced residual lithium by applying a specific process method in a step of primarily heat-treating and/or secondarily heat-treating an oxide precursor with a lithium-containing compound, so as to improve a battery performance such as lifespan, capacity and the like when the positive electrode active material is applied to a secondary battery.

## Technical Solution

A positive electrode active material according to one aspect of the present invention may be a lithium composite oxide, and may satisfy relational expression 1 below in an XRD pattern obtained through Rietveld fitting as a result of X-ray diffraction (XRD) analysis using a $CuK\alpha$ ray.

$$\text{[Relational Expression 1]} \quad 0.110 \leq FWHM_{(104)} \leq 0.170.$$

In above relational expression 1, said $FWHM_{(104)}$ may mean a full width at half maximum (FWHM(deg., $2\Theta$)) of a (104) plane at an XRD peak defined by a hexagonal lattice having a R-3m space group.

In one aspect, the positive electrode active material may satisfy relational expression 2 below in an XRD pattern obtained through Rietveld fitting as a result of X-ray diffraction (XRD) analysis using a CuK$\alpha$ ray.

$$\text{[Relational Expression 2]} \quad 0.080 \leq FWHM_{(003)} \leq 0.130.$$

In above relational expression 2, said $FWHM_{(003)}$ may mean a full width at half maximum (FWHM(deg., 20)) of a (003) plane at an XRD peak defined by a hexagonal lattice having a R-3m space group.

In one aspect, the positive electrode active material may have an axis lattice parameter of 2.860 to 2.890.

In one aspect, the positive electrode active material may have a c axis lattice parameter of 14.190 to 14.200.

In one aspect, the positive electrode active material may have a bimodal form including a first positive electrode active material particle having an average particle diameter (D50) of 8 $\mu$m or more and a second positive electrode active material particle having an average particle diameter (D50) of 7 $\mu$m or less.

A method for preparing a positive electrode active material according to one aspect of the present invention may include: preparing an oxide precursor; and preparing a first lithium composite oxide by primarily heat-treating a first mixture including the prepared oxide precursor, a lithium-containing compound, and a first cobalt-containing compound.

In one aspect, the method may further include: after the preparing of the first lithium composite oxide, preparing a second lithium composite oxide by secondarily heat-treating a second mixture including the prepared first lithium composite oxide and a second cobalt-containing compound.

In one aspect, there may be provided $0.1 \leq A/B \leq 0.5$ when a mol% of cobalt included in the first cobalt-containing compound based on the total metal of the oxide precursor prepared above is A in the preparing of the first lithium composite oxide, and a mol% of cobalt included in the second cobalt-containing compound based on the total metal excluding lithium of the first lithium composite oxide prepared above is B in the preparing of the second lithium composite oxide.

In one aspect, the first cobalt-containing compound may be $Co_3O_4$.

In one aspect, the second cobalt-containing compound may be $Co_3O_4$.

In one aspect, the second heat treatment temperature Y may be 690°C < Y < 720°C.

A positive electrode active material according to one aspect of the present invention may be prepared according to the method for preparing the positive electrode active material.

A positive electrode according to one aspect of the present invention may include the positive electrode active material.

A secondary battery according to one aspect of the present invention may include the positive electrode active material.

**Advantageous Effects**

The present invention can have one effect of improving a battery performance such as lifespan, capacity and the like by preparing a positive electrode active material having an increased amount of production, increased stability and reduced residual lithium, when the positive electrode active material is applied to a secondary battery.

**Brief Description of the Drawings**

FIG. 1 shows an effect of reducing vacancy of nickel after a primary heat treatment and an effect of removing residual lithium after a secondary heat treatment through a preparation method according to an embodiment of the present invention.

FIG. 2 shows a comparison of (104) shift changes after the primary heat treatment and the secondary heat treatment through the preparation method according to an embodiment of the present invention as a result of X-ray diffraction (XRD) analysis using a CuK$\alpha$ ray.

**Mode for Invention**

As used herein, expressions such as "including" may need to be understood as openended terms which imply the possibility of including other components.

As used herein, "preferred" and "preferably" may refer to embodiments of the present invention which may provide specific advantages under specific circumstances. However, they are not intended to exclude other embodiments from the scope of the present invention.

In addition, the singular form used in the specification and the appended claims may be intended to include a plural form unless otherwise indicated in the context.

Meanwhile, technical features described below relate to one aspect of achieving the desired effect of the present invention as described above.

In other words, a positive electrode active material and a method for preparing the positive electrode active material according to one aspect of the present invention may include technical features according to one aspect described below, and thus may remarkably improve battery properties when applied to a secondary battery.

The present invention relates to a positive electrode active material for a secondary battery and a method for preparing the positive electrode active material, and the secondary battery of the present invention is not limited in the kind thereof as long as it is a battery which converts external electric energy into a form of chemical energy and stores the chemical energy to be reused. As one more preferred example, the present invention may relate to a positive electrode active material for a lithium ion secondary battery and a method for preparing a positive electrode active material.

First, a positive electrode active material according to one aspect of the present invention will be described.

A positive electrode active material according to one aspect of the present invention may be a lithium composite oxide.

In one aspect, the positive electrode active material may include nickel (Ni).

In one aspect, the positive electrode active material may further include any one or more selected from cobalt (Co), aluminum (Al), and manganese (Mn).

In one aspect, the positive electrode active material may be represented by formula 1 below.

$$[\text{Formula 1}] \qquad Li_aNi_xCo_yM_{1-x-y}O_2$$

In above formula 1, M may be selected from the group consisting of Zr, Mn, Al, B, Ba, Ce, Cr, F, Mg, V, Ti, Fe, Zn, Si, Y, Nb, Ga, Sn, Mo, W, P, Sr, and a combination thereof, and may be $0.9 \leq a \leq 1.2$, $0.5 \leq x \leq 1.0$, $0.0 \leq y \leq 0.4$, or $0.0 \leq 1-x-y \leq 0.4$.

In one aspect, the positive electrode active material may be represented by formula 1-1 below.

$$[\text{Formula 1-1}] \qquad Li_{a'}Ni_{x'}Co_{y'}M1_{z'}M2_{1-x'-y'-z'}O_2$$

In above formula 1-1, M1 may be Al or Mn, M2 may be selected from the group consisting of Zr, B, Ba, Ce, Cr, F, Mg, V, Ti, Fe, Zn, Si, Y, Nb, Ga, Sn, Mo, W, P, Sr, and a combination thereof, and may be $0.9 \leq a' \leq 1.2$, $0.5 \leq x' \leq 1.0$, $0.0 \leq y' \leq 0.4$, $0.0 \leq z' \leq 0.4$, or $0.0 \leq 1-x'-y'-z' \leq 0.4$.

In one aspect, in above formula 1 and/or formula 1-1, a and/or a', which means a mol% of lithium (Li) based on a mol% of all metals excluding lithium (Li), may be 0.9 or more, 1.0 or more, 1.2 or less, 1.1 or less, or 1.05 or less.

In one aspect, in above formula 1 and/or formula 1-1, x and/or x', which means a mol% of nickel (Ni) based on a mol% of all metals excluding lithium (Li), may be 0.5 or more, 0.6 or more, 0.7 or more, 0.8 or more, or 0.9 or more. In particular, x and/or x' may be a high nickel-based oxide which is 0.8 or more, or 0.9 or more.

In one aspect, in above formula 1 and/or formula 1-1, y and/or y', which means a mol% of cobalt (Co) based on a mol% of all metals excluding lithium (Li), may be 0.4 or less, 0.3 or less, 0.2 or less, or 0.1 or less.

In one aspect, a crystal structure of the positive electrode active material may be a hexagonal $\alpha$-NaFeO$_2$ (R-3m space group).

In one aspect, the positive electrode active material may satisfy relational expression 1 below in an XRD pattern obtained through Rietveld fitting as a result of X-ray diffraction (XRD) analysis using a CuK$\alpha$ ray.

$$[\text{Relational Expression 1}] \ 0.110 \leq FWHM_{(104)} \leq 0.170.$$

In above relational expression 1, said $FWHM_{(104)}$ may mean a full width at half maximum (FWHM(deg., 2$\theta$)) of a (104) plane at an XRD peak defined by a hexagonal lattice having a R-3m space group.

In one aspect, said $FWHM_{(104)}$ may be 0.110 or more, 0.120 or more, 0.130 or more, 0.170 or less, 0.160 or less, 0.150 or less, or 0.140 or less.

In the present invention, upon XRD analysis, the FWHM value causes a deviation and an error due to various variables such as a condition of analysis equipment, an X-ray source, measurement conditions, etc., and thus corrected with the FWHM of corundum disc as a standard sample.

In the present invention, the corundum disc used herein was the corundum disc of the NIST.

For X-ray diffraction (XRD) analysis in the present invention, a step size (°/step) was measured at 0.02°/step, and a measurement time per step was measured at 0.1 s/step by using a Bruker D8 Advance diffractometer using CuKα radiation (1.540598Å).

In one aspect, the positive electrode active material may satisfy relational expression 2 below in an XRD pattern obtained through Rietveld fitting as a result of X-ray diffraction (XRD) analysis using a CuKα ray.

$$[\text{Relational Expression 2}] \; 0.080 \leq FWHM_{(003)} \leq 0.130.$$

In above relational expression 2, said $FWHM_{(003)}$ may mean a full width at half maximum (FWHM(deg., 2Θ)) of a (003) plane at an XRD peak defined by a hexagonal lattice having a R-3m space group.

In one aspect, said $FWHM_{(003)}$ may be 0.080 or more, 0.090 or more, 0.100 or more, 0.130 or less, 0.120 or less, or 0.110 or less.

In one aspect, an a axis lattice parameter of the positive electrode active material may be 2.860 or more, 2.870 or more, 2.871 or more, 2.872 or more, 2.873 or more, 2.890 or less, 2.880 or less, 2.875 or less, or 2.874 or less.

In one aspect, a c axis lattice parameter of the positive electrode active material may be 14.185 or more, 14.190 or more, 14.192 or more, 14.193 or more, 14.200 or less, 14.195 or less, or 14.194 or less.

In the present invention, the a-axis lattice parameter and the c-axis lattice parameter may be values calculated by indexing XRD measurement data through Rietveld refinement.

In one aspect, the positive electrode active material may include a plurality of positive electrode active material particles.

In one aspect, the positive electrode active material particle may be a secondary particle formed by aggregation of one or more primary particles.

In one aspect, the primary particle may include one or more crystallites.

In one aspect, the secondary particle may have a multiparticulate or polycrystal form including two or more primary particles.

In one aspect, the positive electrode active material may have a unimodal form including a positive electrode active material particle having an average particle diameter (D50) of 1 μm to 30 μm.

In the present invention, the average diameter (D50) may be a particle diameter at 50% of an area cumulative distribution according to a particle diameter, which may be measured by using a laser diffraction method.

In one more preferred aspect, the positive electrode active material may have a bimodal form including a first positive electrode active material particle having an average particle diameter (D50) of 8 μm or more and a second positive electrode active material particle having an average particle diameter (D50) of 7 μm or less.

In one aspect, if the positive electrode active material has a bimodal form, wl/w2 may be 1.5 to 9.0, or 2.0 to 4.0 when a weight of the first positive electrode active material particles included in the positive electrode active material is w1 and a weight of the second positive electrode active material particles included in the positive electrode active material is w2. With regard to a bimodal type positive electrode active material having such a mixing ratio, the present invention may solve the problem of deterioration in battery properties due to a change in an average particle diameter deviation of large particles and small particles, while increasing energy density by the small particles present in pores between the large particles.

In one aspect, when the positive electrode active material of the present invention has a bimodal form, the first positive electrode active material particle, which is the large particle, may be a secondary particle formed by aggregation of primary particles.

In one aspect, the primary particle of the first positive electrode active material particle, which is the large particle, may include one or more crystallites.

In one aspect, the secondary particle of the first positive electrode active material particle, which is the large particle, may have a multiparticulate or polycrystal form including a plurality of primary particles.

In one aspect, the second positive electrode active material particle, which is the small particle, may have a single particle form including one primary particle, and when the primary particle consists of one crystallite, it may have a single crystal form.

In another aspect, the second positive electrode active material particle, which is the small particle, may have a multiparticulate or polycrystal form including two or more primary particles.

In addition, during the preparation of the positive electrode active material, cobalt added into the primary heat treatment and/or the secondary heat treatment with respect to the method for preparing a positive electrode active material described below may be present in a form of a cobalt oxide on a surface of the positive electrode active material secondary particle and/or at a grain boundary between the primary particles in addition to being present in a lattice structure of the positive electrode active material primary particle. The cobalt oxide may be an oxide in which lithium and cobalt are subjected to complexation, or may be an oxide of cobalt.

In one aspect, the cobalt oxide may include a concentration gradient portion in which a molar concentration of cobalt varies. As one example, when the cobalt oxide includes lithium, a molar concentration of lithium may vary. In addition, as one example, the molar concentration of said cobalt may vary.

In one aspect, with respect to the positive electrode active material, an element added in addition to said cobalt may be present together in the lattice structure of the primary particles. As one example, the element may be at least one selected from aluminum (Al), titanium (Ti), zirconium (Zr), magnesium (Mg), zinc (Zn), boron (B), molybdenum (Mo), iron (Fe), nickel (Ni), barium (Ba), tungsten (W) and the like.

Meanwhile, in the present specification, the term "element" may be interpreted to include both a zero-valent state and an ion state.

In one additional aspect, with respect to the positive electrode active material, a coating oxide of another element may be further formed on a surface of the secondary particle and/or at a grain boundary between the primary particles.

In one aspect, the coating oxide may be represented by formula 2 below.

[Formula 2] $Li_pM3_qO_r$

In above formula 2, M3 may be at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd, and Nd, and may be $0 \leq p \leq 10$, $0 < q \leq 8$, and $2 \leq r \leq 13$.

As one example, in above formula 2, M3 may refer to a coating element, and the coating oxide may be an oxide in which lithium and an element represented by M3 are subjected to complexation, or an oxide of M3.

As one example, the coating oxide may be $Li_pCo_qO_r$, $Li_pW_qO_r$, $Li_pZr_qO_r$, $Li_pTi_qO_r$, $Li_pNi_qO_r$, $Li_pAl_qO_r$, $Li_pMo_qO_r$, $Co_qO_r$, $Al_qO_r$, $W_qO_r$, $Zr_qO_r$, $Ti_qO_r$, $B_qO_r$, $Li_p(W/Ti)_qO_r$, $Li_p(W/Zr)_qO_r$, $Li_p(W/Ti/Zr)_qO_r$, $Li_p(W/Ti/B)_qO_r$, but is not limited thereto.

In one aspect, during the preparation of the positive electrode active material, the coating oxide may be a coating oxide including an element which may be included in the first mixture and/or the second mixture with respect to the method for preparing a positive electrode active material described below, and may be a coating oxide containing an element selected from aluminum (Al), titanium (Ti), zirconium (Zr), magnesium (Mg), zinc (Zn), boron (B), molybdenum (Mo), iron (Fe), nickel (Ni), barium (Ba), tungsten (W) and the like.

Meanwhile, the technical feature of the positive electrode active material described above may relate to an average technical feature of a plurality of positive electrode active material particles included in the positive electrode active material.

In the meantime, the meaning of "≤", "or more" or "or less" described in the present invention may be replaced with the meaning of "<", "more than" or "less than."

Then, a method for preparing a positive electrode active material according to one aspect of the present invention will be described.

First, as the method for preparing the positive electrode active material according to one aspect of the present invention, a step of preparing an oxide precursor may be performed.

The positive electrode active material according to one aspect of the present invention may be prepared from an oxide precursor.

In one aspect, the oxide precursor may include nickel (Ni).

In one aspect, the oxide precursor may further include any one or more selected from cobalt (Co), aluminum (Al), and manganese (Mn).

In one aspect, the oxide precursor may be represented by formula 3 below.

[Formula 3] $Ni_xCo_yM_{1-x-y}O_2$

In above formula 3, M may be selected from the group consisting of Zr, Mn, Al, B, Ba, Ce, Cr, F, Mg, V, Ti, Fe, Zn, Si, Y, Nb, Ga, Sn, Mo, W, P, Sr, and a combination thereof, and may be $0.5 \leq x \leq 1.0$, $0.0 \leq y \leq 0.4$, or $0.0 \leq 1-x-y \leq 0.4$.

In one aspect, the oxide precursor may be represented by formula 3-1 below.

[Formula 3-1] $Ni_{x'}Co_{y'}M1_{z'}M2_{1-x'-y'-z'}O_2$

In above formula 3-1, M1 may be Al or Mn, M2 may be selected from the group consisting of Zr, B, Ba, Ce, Cr, F, Mg, V, Ti, Fe, Zn, Si, Y, Nb, Ga, Sn, Mo, W, P, Sr, and a combination thereof, and may be $0.5 \leq x' \leq 1.0$, $0.0 \leq y' \leq 0.4$, $0.0 \leq z' \leq 0.4$, or $0.0 \leq 1-x'-y'-z' \leq 0.4$.

In one aspect, in above formula 3 and/or formula 3-1, x and/or x', which means a mol% of nickel (Ni) based on a mol% of all metals, may be 0.5 or more, 0.6 or more, 0.7 or more, 0.8 or more, or 0.9 or more. In particular, x and/or x' may be a high nickel-based oxide which is 0.8 or more, or 0.9 or more.

In one aspect, in above formula 3 and/or formula 3-1, y and/or y', which means a mol% of cobalt (Co) based on a mol% of all metals, may be 0.4 or less, 0.3 or less, 0.2 or less, or 0.1 or less.

Meanwhile, the oxide precursor may be prepared by oxidizing a hydroxide precursor.

More specifically, the oxide precursor may be prepared by oxidizing the hydroxide precursor through heat treatment, and in this case, the temperature for heat treatment may be 300°C to 500°C, or 350°C to 450°C.

Then, the preparing of a first lithium composite oxide may be performed by primarily heat-treating a first mixture including the prepared oxide precursor, a lithium-containing compound, and a first cobalt-containing compound.

In one more preferred aspect, the first cobalt-containing compound may be $Co_3O_4$. $Co_3O_4$ may be effective in removing residual lithium by reacting with residual lithium on the surface of particles as well as improving a battery performance such as lifespan, capacity and the like.

In one additional aspect, the first mixture may further include at least one compound containing an element selected from aluminum (Al), titanium (Ti), zirconium (Zr), magnesium (Mg), zinc (Zn), boron (B), molybdenum (Mo), iron (Fe), nickel (Ni), barium (Ba), tungsten (W) and the like. More preferably, aluminum (Al) may also be included in the first mixture.

In one aspect, the first heat treatment temperature may be 690°C or more, 700°C or more, 720°C or less, or 710°C or less.

In the method for preparing the positive electrode active material according to one aspect of the present invention, a washing process may not be performed after the preparing of the first lithium composite oxide.

In the case of the positive electrode active material, particularly the high nickel-based positive electrode active material, due to a high Li/M ratio during preparation, a content of residual lithium after calcination is so high that it is difficult to prepare a cell due to a gelation phenomenon during preparation of an electrode slurry. Accordingly, a washing process of adding particles to distilled water, etc., is introduced to remove residual lithium, but there is a problem in that a surface of the positive electrode is damaged during the washing process and thus the battery properties are lowered.

According to the present invention, when the oxide precursor is subjected to the primary heat treatment and/or the secondary heat treatment, a cobalt-containing compound such as $Co_3O_4$, etc., may be added to effectively remove residual lithium without performing the washing process for removing the residual lithium, thereby reducing damage to the surface of the positive electrode, etc.

In addition, according to the present invention, an optimum ratio of cobalt content added and/or conditions for the secondary heat treatment temperature in each heat treatment step may be optimized to effectively remove residual lithium without performing the washing process for removing the residual lithium, thereby reducing damage to the surface of the positive electrode, etc.

In one aspect, after the preparing of the first lithium composite oxide, the preparing of a second lithium composite oxide may be further performed by secondarily heat-treating a second mixture including the prepared first lithium composite oxide and a second cobalt-containing compound.

In one more preferred aspect, the second cobalt-containing compound may be $Co_3O_4$. $Co_3O_4$ may be effective in removing residual lithium by reacting with residual lithium on the surface of particles as well as improving a battery performance such as lifespan, capacity and the like.

In one additional aspect, the second mixture may further include at least one compound containing an element selected from aluminum (Al), titanium (Ti), zirconium (Zr), magnesium (Mg), zinc (Zn), boron (B), molybdenum (Mo), iron (Fe), nickel (Ni), barium (Ba), tungsten (W) and the like. More preferably, titanium (Ti) and zirconium (Zr) may also be included in the second mixture.

Meanwhile, in the present invention, in the preparing of the first lithium composite oxide, a mol % of cobalt included in the first cobalt-containing compound based on the total metal of the prepared oxide precursor may be defined as A.

In addition, in the preparing of the second lithium composite oxide, a mol % of cobalt included in the second cobalt-containing compound based on the total metal excluding lithium of the first lithium composite oxide prepared above may be defined as B.

In this case, A/B may be 0.1 or more, 0.2 or more, 0.3 or more, 0.5 or less, or 0.4 or less.

The present inventors newly recognized that the effects of cobalt added in the primarily treating and secondarily treating of the oxide precursor were different from each other, and optimized a content of cobalt added in each heat treatment.

More specifically, it could be confirmed that a doping effect in the finally prepared positive electrode active material by the cobalt content added during the primary heat treatment is maintained, but the doping effect by the cobalt content added during the secondary heat treatment is not significant.

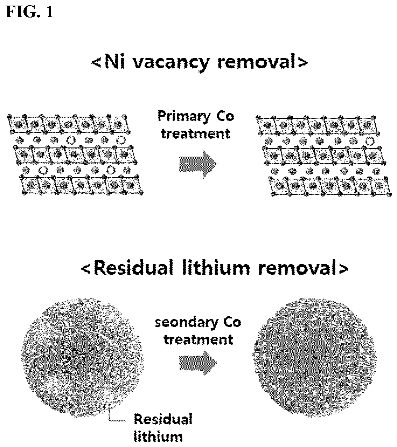

In contrast, it was confirmed that as the cobalt content increases during the primary heat treatment and the secondary heat treatment of the oxide precursor, the residual lithium of the positive electrode active material decreases, but even if the total content of cobalt added is the same, the cobalt content added during the secondary heat treatment has a greater effect on the reduction of the residual lithium (FIG. 1).

Thus, the present inventors have recognized the need to optimize a ratio of the cobalt content added in each step, considering that the effects of cobalt added in the primary heat treatment and the secondary heat treatment are different from each other.

Accordingly, it was confirmed that even if the total content of cobalt added is the same, when the content of cobalt added in the preparing of the first lithium composite oxide is 0.1 to 0.5 of the content of cobalt added in the preparing of the second lithium composite oxide, a battery performance may be further improved while maximizing the doping effect and a synergy effect of residual lithium removal.

In one aspect, A for a content of cobalt added in the preparing of the first lithium composite oxide may be 0.5 mol% or more, 0.8 mol% or more, 3.5 mol% or less, 3.0 mol% or less, 2.5 mol% or less, 2.0 mol% or less, 1.5 mol% or less, or 1.2 mol% or less.

In one aspect, B for a content of cobalt added in the preparing of the second lithium composite oxide may be 0.5 mol% or more, 1.0 mol% or more, 1.5 mol% or more, 2.0 mol% or more, 2.5 mol% or more, 4.0 mol% or less, or 3.5 mol% or less.

In one aspect, A+B (mol% of cobalt added based on the total metal excluding lithium) for a total content of cobalt added in the preparing of the positive electrode active material may be 2.5 mol% or more, 3.0 mol% or more, 4.5 mol% or less, or 4.0 mol% or less.

In one more preferred aspect, the second heat treatment temperature Y may be 690°C or more, more than 690°C, 700°C or more, 720°C or less, less than 720°C, or 710°C or less.

The present inventors optimized the content of cobalt added in the primary heat treatment and the secondary heat treatment, and optimized the secondary heat treatment temperature for the optimized content of cobalt.

As a result, it was confirmed that when the secondary heat treatment temperature Y is within the above range, the battery performance is further improved.

A positive electrode active material according to one aspect of the present invention may be prepared according to the method for preparing the positive electrode active material described above.

The positive electrode active material may include the technical features of the positive electrode active material described above.

A positive electrode according to one aspect of the present invention may include the positive electrode active material.

The positive electrode may have a known structure and may be prepared according to a known preparation method except for using the positive electrode active material described above. A binder, a conductive material, and a solvent are not particularly limited as long as they may be used on the positive electrode current collector of the secondary battery.

A secondary battery according to one aspect of the present invention may include the positive electrode active material.

The secondary battery may specifically include a positive electrode, a negative electrode positioned opposite to the positive electrode, and an electrolyte between the positive electrode and the negative electrode, but is not particularly limited as long as it may be used as a secondary battery.

Hereinafter, the exemplary embodiments of the present invention will be described in more detail.

### Preparation of positive electrode active material

### <Example 1>

(a) Preparation of hydroxide precursor

NaOH and $NH_4OH$ were added to an aqueous solution in which $NiSO_4·6H_2O$, $CoSO_4·7H_2O$ and $MnSO_4·H_2O$ were mixed at a molar ratio of 95:4:1 in a reactor while being stirred. A temperature in the reactor was maintained at 45°C, and a hydroxide precursor synthesis reaction was performed while $N_2$ gas was added into the reactor. After completion of the reaction, washing and dehydration were performed to obtain a hydroxide large particle precursor having a composition of $Ni_{0.95}Co_{0.04}Mn_{0.01}(OH)_2$. The hydroxide small particle precursor was prepared at a molar ratio of 94:5:1 through such method.

(b) Preparation of oxide precursor

The hydroxide precursor prepared in above step (a) was oxidized in a firing furnace under an $O_2$ atmosphere at 400°C for six hours to obtain an oxide precursor.

An average particle diameter (D50) of the obtained oxide large particle precursor was 15.0 $\mu$m, and an average particle diameter (D50) of the oxide small particle precursor was 3.0 $\mu$m.

(c) Preparation of first lithium composite oxide

A first mixture was prepared by mixing the oxide large particle precursor and the oxide small particle precursor (weight ratio of 7:3) prepared in above step (b), LiOH (Li/metal molar ratio=1.015), which is a lithium-containing material, $Co_3O_4$, in which the Co content was measured to be 0.925 mol % based on the total metal of the oxide precursor, and $Al(OH)_3$, in which the Al content was measured to be 0.85 mol %. Then, a temperature was raised up to 705°C by heating a firing furnace for two hours and 20 minutes under an $O_2$ atmosphere, and the resulting mixture was subjected to a primary heat treatment for eight hours, followed by furnace cooling and pulverization to obtain a first lithium composite oxide.

(d) Preparation of second lithium composite oxide

A second mixture was prepared by mixing the first lithium composite oxide prepared in above step (c), $Co_3O_4$, in which the Co content was measured to be 2.775 mol % based on the total metal of the first lithium composite oxide excluding lithium, $TiO_2$, in which the Ti content was measured to be 0.2 mol%, and $ZrO_2$, in which the Zr content was measured to be 0.1 mol %. Then, a temperature was raised up to 705°C by heating a firing furnace for two hours and 20 minutes under an air atmosphere, and the resulting mixture was subjected to a secondary heat treatment for eight hours, followed by furnace cooling to obtain a second lithium composite oxide.

**<Example 2>**

A second lithium composite oxide was prepared in the same manner as in above Example 1, except that the secondary heat treatment was performed by raising the temperature of the firing furnace up to 690°C in above step (d).

**<Example 3>**

A second lithium composite oxide was prepared in the same manner as in above Example 1, except that the secondary heat treatment was performed by raising the temperature of the firing furnace up to 720°C in above step (d).

**<Example 4>**

A second lithium composite oxide was prepared in the same manner as in above Example 1, except that $Co_3O_4$, in which the Co content was measured to be 1.85 mol%, was mixed in above step (c), and $Co_3O_4$, in which the Co content was measured to be 1.85 mol%, was mixed and the secondary heat treatment was performed by raising the temperature of the firing furnace up to 690°C in above step (d).

**<Example 5>**

A second lithium composite oxide was prepared in the same manner as in above Example 1, except that $Co_3O_4$, in which the Co content was measured to be 1.85 mol%, was mixed in above step (c), and $Co_3O_4$, in which the Co content was measured to be 1.85 mol%, was mixed in above step (d).

**<Example 6>**

A second lithium composite oxide was prepared in the same manner as in above Example 1, except that $Co_3O_4$, in which the Co content was measured to be 1.85 mol%, was mixed in above step (c), and $Co_3O_4$, in which the Co content was measured to be 1.85 mol%, was mixed and the secondary heat treatment was performed by raising the temperature of the firing furnace up to 720°C in above step (d).

**<Example 7>**

A second lithium composite oxide was prepared in the same manner as in above Example 1, except that $Co_3O_4$, in which the Co content was measured to be 2.775 mol%, was mixed in above step (c), and $Co_3O_4$, in which the Co content was measured to be 0.925 mol%, was mixed and the secondary heat treatment was performed by raising the temperature of the firing furnace up to 690°C in above step (d).

**<Example 8>**

A second lithium composite oxide was prepared in the same manner as in above Example 1, except that $Co_3O_4$,

in which the Co content was measured to be 2.775 mol%, was mixed in above step (c), and $Co_3O_4$, in which the Co content was measured to be 0.925 mol%, was mixed in above step (d).

**<Example 9>**

A second lithium composite oxide was prepared in the same manner as in above Example 1, except that $Co_3O_4$, in which the Co content was measured to be 2.775 mol%, was mixed in above step (c), and $Co_3O_4$, in which the Co content was measured to be 0.925 mol%, was mixed and the secondary heat treatment was performed by raising the temperature of the firing furnace up to 720°C in above step (d).

**Preparation of lithium secondary battery**

A positive electrode slurry was prepared by dispersing 95.5 wt% of the positive electrode active materials prepared according to above Examples, 2.5 wt% of artificial graphite, and 2 wt% of a PVDF binder in 2.7 g of N-methyl-2-pyrrolidone (NMP). The positive electrode slurry was uniformly applied to an aluminum thin film having a thickness of 15 μm and vacuum-dried at 135°C to prepare a positive electrode for a lithium secondary battery.

A coin battery was manufactured by using a lithium foil as a counter electrode with respect to the positive electrode, a porous polyethylene film (Celgard 2300, thickness: 25 μm) as a separator, and an electrolyte solution in which LiPF6 was present at a concentration of 1.15 M in a solvent, in which ethylene carbonate and ethyl methyl carbonate were mixed at a volume ratio of 3:7.

**<Experimental Example 1>** Measurement of full width at half maximum (FWHM(deg., 2θ))

The full width at half maximum (FWHM(deg., 2Θ)) of the second lithium composite oxide according to above Examples was measured and is shown in table 1 below.

In addition, an a-axis lattice parameter and a c-axis lattice parameter of the second lithium composite oxide according to above Examples were measured and are shown in table 1 below.

The measurement method thereof has been described above.

**<Table 1>**

| Classification | | | Example 1 | Example 2 | Example 3 | Example 4 | Example 5 | Example 6 | Example 7 | Example 8 | Example 9 |
|---|---|---|---|---|---|---|---|---|---|---|---|
| After second calcination XRD | FWHM | (003) | 0.1053 | 0.1074 | 0.112 | 0.1118 | 0.1059 | 0.1308 | 0.113 | 0.1072 | 0.1093 |
| | | (104) | 0.1383 | 0.1446 | 0.1466 | 0.1516 | 0.1452 | 0.1657 | 0.1545 | 0.1463 | 0.1455 |
| | a | | 2.873 | 2.8729 | 2.8729 | 2.8726 | 2.8729 | 2.8729 | 2.872 | 2.8721 | 2.8718 |
| | c | | 14.1932 | 14.1943 | 14.1935 | 14.1926 | 14.1928 | 14.1921 | 14.1897 | 14.1899 | 14.1888 |

**<Experimental Example 2> XRD measurement**

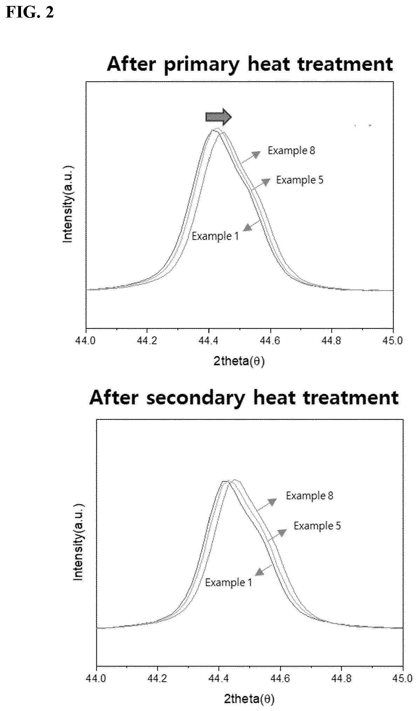

The results of X-ray diffraction (XRD) analysis of the first lithium composite oxide and the second lithium composite oxide according to above Examples are shown in FIG. 2.

For X-ray diffraction (XRD) analysis, a step size (°/step) was measured at 0.02°/step, and a measurement time per step was measured at 0.1 s/step by using a Bruker D8 Advance diffractometer using CuK$\alpha$ radiation (1.540598Å).

Referring to FIG. 2, it can be confirmed that a (104) shift occurs as a content of cobalt added during the primary heat treatment increases, but the content of cobalt added during the secondary heat treatment does not affect a change in the position of the (104) shift.

In addition, it could be confirmed that the doping effect in the finally prepared positive electrode active material is maintained by the content of cobalt added during the primary heat treatment.

**<Experimental Example 3> Measurement of residual lithium**

The results of measuring residual lithium of the first lithium composite oxide and the second lithium composite oxide according to above Examples are shown in table 2 below.

Residual lithium was measured by an amount of 0.1 M HCl used until pH 4 is achieved by pH titration. First, 5 g of oxide was added to 100 ml of DIW, stirred for 15 minutes, and then filtered. Then, after taking 50 ml of the filtered solution, 0.1 M HCl was added thereto to measure an HCl consumption according to a pH change, and thus Q1 and Q2 were determined and residual LiOH and $Li_2CO_3$ were calculated according to the following calculation formula.

M1 = 23.94 (LiOH Molecular weight)
M2 = 73.89 ($Li_2CO_3$ Molecular weight)

$$\text{LiOH(ppm)} = \frac{(Q1-Q2)*M1*HCl\ con.*DIW(g)}{Solution(g)*powder(g)}*10{,}000$$

$$\text{Li}_2\text{CO}_3\text{(ppm)} = \frac{2*Q2*M2/2*HCl\ con.*DIW(g)}{Solution(g)*powder(g)}*10{,}000$$

**<Table 2>**

| Classification | After primary heat treatment | | | After secondary heat treatment second | | |
|---|---|---|---|---|---|---|
| | LiOH | $Li_2CO_3$ | Free Li | LiOH | $Li_2CO_3$ | Free Li |
| **Example 1** | 8,169 | 7,156 | 0.371 | 6,357 | 9,715 | 0.367 |
| **Example 2** | 8,169 | 7,156 | 0.371 | 5,721 | 8,706 | 0.329 |
| **Example 3** | 8,169 | 7,156 | 0.371 | 6,512 | 8,960 | 0.357 |
| **Example 4** | 7,803 | 6,686 | 0.352 | 6,563 | 8,912 | 0.358 |
| **Example 5** | 7,803 | 6,686 | 0.352 | 7,109 | 9,541 | 0.385 |
| **Example 6** | 7,803 | 6,686 | 0.352 | 7,809 | 8,745 | 0.391 |
| **Example 7** | 7,457 | 6,783 | 0.344 | 7,134 | 12,182 | 0.436 |
| **Example 8** | 7,457 | 6,783 | 0.344 | 8,600 | 9,401 | 0.426 |
| **Example 9** | 7,457 | 6,783 | 0.344 | 8,131 | 9,815 | 0.420 |

Referring to above table 2, it could be confirmed that as a content of cobalt added increases during the primary heat treatment and the secondary heat treatment, the residual lithium of the positive electrode active material decreases, but even if the total content of cobalt added is the same, the cobalt content input added during the secondary heat treatment has a greater effect on the reduction of the residual lithium.

In addition, an effect of removing residual lithium was confirmed in the positive electrode active material finally prepared without a washing process, and in particular, it could be confirmed that the effect of removing residual lithium is increased by the cobalt added during the secondary heat treatment.

Furthermore, it could be confirmed that Examples 1, 2 and 3, in which the Co content is increased during the secondary heat treatment, exhibit a lowest value of residual lithium.

**<Experimental Example 4> Evaluation of electrochemical properties**

The results of evaluating electrochemical properties for the lithium secondary batteries according to above Examples are shown in table 3 below.

With regard to measurement of an initial charge/discharge capacity, an initial charge capacity and an initial discharge capacity were measured through a charge/discharge experiment using an electrochemical analysis device (Toyo, Toscat-3100) to which 25°C, a voltage range of 2.0 V to 4.25 V, and a discharge rate of 0.1 C were applied, and initial reversible efficiency was calculated.

For C-rate measurement, an output efficiency (C-rate) of 10.0 C/0.1 C was measured through a charge/-discharge experiment using an electrochemical analysis device (Toyo, Toscat-3100) to which 25°C, a voltage range of 2.5 V to 4.25 V, and a discharge rate of 0.1 C to 10.0 C were applied.

A high-temperature lifespan was measured by performing charging/discharging once at 25°C, in a voltage range of 2.0 V to 4.25 V, and at 0.1 C/0.1 C and once in a voltage range of 2.5 V to 4.25 V and at 0.2 C/0.2 C, and performing charging/discharging 50 times at 45°C, in a voltage range of 2.5 V to 4.25 V, and at 1.0 C/5.0 C, and then measuring a ratio of discharge capacity at a 50th cycle to an initial capacity (cycle capacity retention rate).

**<Table 3>**

| Classification | Initial charge capacity | Initial discharge capacity | Initial reversible efficiency | C-rate (10C/0.1C) | High temperature lifespan |
|---|---|---|---|---|---|
| | mAh/g | mAh/g | % | % | % |
| Example 1 | 234.1 | 220.2 | 94.1 | 80.1 | 80.8 |
| Example 2 | 233.3 | 217.7 | 93.3 | 80.8 | 84.6 |
| Example 3 | 233.1 | 217.0 | 93.1 | 80.4 | 84.0 |
| Example 4 | 234.6 | 218.0 | 92.9 | 81.1 | 77.0 |
| Example 5 | 234.0 | 219.1 | 93.6 | 81.0 | 72.8 |
| Example 6 | 234.0 | 217.5 | 92.9 | 81.3 | 77.5 |
| Example 7 | 232.8 | 216.5 | 93.0 | 79.8 | 78.0 |
| Example 8 | 233.4 | 218.6 | 93.6 | 79.0 | 72.6 |
| Example 9 | 233.1 | 216.7 | 93.0 | 79.6 | 78.3 |

According to above table 3, it could be confirmed that Examples 1, 5 and 8, in which the secondary heat treatment temperature is 705°C, have a highest initial charge/discharge capacity.

In addition, it could be confirmed that Examples 1, 2 and 3, in which a ratio of Co content is 1/3 during the primary heat treatment and the secondary heat treatment, exhibit a good result of high-temperature lifespan.

Meanwhile, in the case of Example 1, in which the ratio of Co content is 1/3 during the primary heat treatment and the secondary heat treatment and the secondary heat treatment temperature is 705°C, it could be confirmed that optimal battery properties are implemented.

**Claims**

1. A positive electrode active material comprising a lithium composite oxide, wherein the positive electrode active material satisfies relational expression 1 below in an XRD pattern obtained through Rietveld fitting as a result of X-ray diffraction (XRD) analysis using a CuK$\alpha$ ray:

$$[\text{Relational Expression 1}] \ 0.110 \leq \text{FWHM}_{(104)} \leq 0.170,$$

wherein, in above relational expression 1, said $FWHM_{(104)}$ means a full width at half maximum (FWHM(deg., 2Θ)) of a (104) plane at an XRD peak defined by a hexagonal lattice having a R-3m space group.

2. The positive electrode active material of claim 1, wherein the positive electrode active material satisfies relational expression 2 below in an XRD pattern obtained through Rietveld fitting as a result of X-ray diffraction (XRD) analysis using a CuKα ray:

$$[\text{Relational Expression 2}]\ 0.080 \leq FWHM_{(003)} \leq 0.130,$$

wherein, in above relational expression 2, said $FWHM_{(003)}$ means a full width at half maximum (FWHM(deg., 2Θ)) of a (003) plane at an XRD peak defined by a hexagonal lattice having a R-3m space group.

3. The positive electrode active material of claim 1, wherein an a axis lattice parameter is 2.860 to 2.890.

4. The positive electrode active material of claim 1, wherein a c axis lattice parameter is 14.190 to 14.200.

5. The positive electrode active material of claim 1, wherein the positive electrode active material has a bimodal form including a first positive electrode active material particle having an average particle diameter (D50) of 8 μm or more and a second positive electrode active material particle having an average particle diameter (D50) of 7 μm or less.

6. A method for preparing a positive electrode active material, the method comprising:

preparing an oxide precursor; and
preparing a first lithium composite oxide by primarily heat-treating a first mixture including the prepared oxide precursor, a lithium-containing compound, and a first cobalt-containing compound.

7. The method of claim 6, further comprising:
after the preparing of the first lithium composite oxide, preparing a second lithium composite oxide by secondarily heat-treating a second mixture including the prepared first lithium composite oxide and a second cobalt-containing compound.

8. The method of claim 7, wherein there is provided $0.1 \leq A/B \leq 0.5$ when a mol% of cobalt included in the first cobalt-containing compound based on the total metal of the oxide precursor prepared above is A in the preparing of the first lithium composite oxide, and a mol% of cobalt included in the second cobalt-containing compound based on the total metal excluding lithium of the first lithium composite oxide prepared above is B in the preparing of the second lithium composite oxide.

9. The method of claim 6, wherein the first cobalt-containing compound is $Co_3O_4$.

10. The method of claim 7, wherein the second cobalt-containing compound is $Co_3O_4$.

11. The method of claim 7, wherein the second heat treatment temperature Y is 690°C < Y < 720°C.

12. A positive electrode active material prepared by a preparation method of claim 6.

13. A positive electrode comprising a positive electrode active material of claim 1.

14. A secondary battery comprising a positive electrode active material of claim 1.

**FIG. 1**

<Ni vacancy removal>

Primary Co treatment

<Residual lithium removal>

seondary Co treatment

Residual lithium

**FIG. 2**

After primary heat treatment

After secondary heat treatment

Europäisches
Patentamt

European
Patent Office

Office européen
des brevets

# EUROPEAN SEARCH REPORT

**Application Number**

EP 24 20 8104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 824 735 A2 (SAMSUNG SDI CO LTD [KR]) 14 January 2015 (2015-01-14) | 1-5, 12-14 | INV. C01G53/42 |
| A | * claims; examples * | 6-11 | C01G53/80 H01M4/505 |
| X | CN 106 654 191 A (SAMSUNG SDI CO LTD) 10 May 2017 (2017-05-10) * claim 1 * | 1 | H01M4/525 |
| A | CN 114 784 263 A (SAMSUNG SDI CO LTD) 22 July 2022 (2022-07-22) * claims * | 1-14 | |

**TECHNICAL FIELDS SEARCHED (IPC)**

C01G
H01M

The present search report has been drawn up for all claims

| Place of search | Date of completion of the search | Examiner |
|---|---|---|
| Munich | 5 March 2025 | Nobis, Barbara |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                         

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 8104

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | | Publication date | Patent family member(s) | | Publication date |
|---|---|---|---|---|---|
| EP 2824735 | A2 | 14-01-2015 | CN | 104282903 A | 14-01-2015 |
| | | | EP | 2824735 A2 | 14-01-2015 |
| | | | JP | 6508806 B2 | 08-05-2019 |
| | | | JP | 2015018803 A | 29-01-2015 |
| | | | KR | 20150006283 A | 16-01-2015 |
| | | | US | 2015010819 A1 | 08-01-2015 |
| CN 106654191 | A | 10-05-2017 | CN | 106654191 A | 10-05-2017 |
| | | | EP | 3162765 A1 | 03-05-2017 |
| | | | KR | 20170050677 A | 11-05-2017 |
| | | | US | 2017125809 A1 | 04-05-2017 |
| CN 114784263 | A | 22-07-2022 | CN | 114784263 A | 22-07-2022 |
| | | | EP | 4032861 A1 | 27-07-2022 |
| | | | KR | 20220106897 A | 01-08-2022 |
| | | | US | 2022238872 A1 | 28-07-2022 |

EPO FORM P0459

For more details about this annex : see Official Journal of the European Patent Office, No. 12/82